# DEMANDE DE BREVET EUROPEEN

(11) **EP 4 671 885 A1**
(43) Date de publication de la demande: **31.12.2025**
(21) Numéro de dépôt: 25182114.6
(22) Date de dépôt: 11.06.2025
(51) Int. Cl.: G05B 19/042, G05B 19/05, G05B 19/418, G05B 23/02

(54) **INTERFACE HOMME MACHINE À DISTANCE**

(30) Priorité: 28.06.2024 FR 2407008
(71) Demandeur: Sidel Participations, 76930 Octeville-sur-Mer (FR)
(72) Inventeur: PASQUIER, Hervé, 76930 Octeville-sur-Mer (FR); GARIOU, David, 76930 Octeville-sur-Mer (FR)
(74) Mandataire: Sidel Group

(57) **Abrégé**

La présente invention concerne un système de gestion d'une ligne de production (100) comprenant au moins une machine, ledit système comportant au moins une interface homme-machine (20) dite HMI connectée à un automate programmable industriel (19), dit API ou PLC selon l'acronyme anglo-saxon « Programmable Logic Controller, ou à un système numérique de contrôle-commande dit SNCC ou DCS selon l'acronyme anglo-saxon « Distributed Control System » ou similaire, d'une machine de ladite ligne de production, et/ou un terminal portable (23) ; au moins une borne déportée (21) solidaire de la machine ou d'une enceinte de sécurité (22) de ladite machine et connectée à l'interface homme-machine (HMI) (20) ou connectée à l'automate programmable industriel (API) (19) de la machine, ladite borne déportée (21) comportant des moyens de détection de la présence du terminal portable (23) dans un périmètre déterminé et des moyens de connexion dudit terminal portable (23) avec l'interface homme-machine (HMI) (20) et/ou à l'automate programmable industriel (API) (19) de la machine ; ledit système de gestion est remarquable en ce que ledit terminal portable (23) et/ou un accessoire portable (25), connecté audit terminal portable (23) et/ou à la borne déportée (21), comporte un dispositif de génération de vibrations aptes à générer des vibrations lorsque le HMI émet une alarme.

## Description

### Domaine technique

Le domaine de l'invention est celui de la gestion d'une ligne de production comprenant au moins une machine, une interface homme machine dite HMI connectée à au moins une machine de ladite ligne de production et/ou un terminal portable apte à être connecté à ladite machine, ladite interface homme machine dite HMI pouvant être connectée à un système de gestion de la production assistée par ordinateur dit GPAO.

### Etat de la technique

Dans le domaine de la gestion d'une ligne de production industrielle, notamment sur une ligne de production de boissons, il est bien connu qu'un automate programmable industriel, dit API ou PLC selon l'acronyme anglo-saxon « Programmable Logic Controller », est un ordinateur numérique utilisé pour l'automatisation des processus électromécaniques, tels que le contrôle des machines sur les lignes de production. Contrairement aux ordinateurs d'usage courant, l'automate est conçu pour des entrées et sorties multiples, des plages de température étendues, une immunité aux bruits électriques et une résistance aux vibrations et aux chocs. Les programmes destinés à contrôler le fonctionnement des machines sont généralement stockés dans une mémoire non volatile.

La principale différence avec les autres ordinateurs du type PC, selon l'acronyme anglo-saxon « Personal Computer », réside dans le fait que les API ou PLC sont généralement blindés pour résister à des conditions difficiles (telles que la poussière, l'humidité, la chaleur, le froid, etc.) et qu'ils disposent d'un grand nombre d'entrées/ sorties (I/O) pour se connecter, par exemple, à des capteurs et à des actionneurs. Ainsi, les automates (API ou PLC) peuvent être capables de lire des interrupteurs de fin de course, des variables de processus analogiques (telles que la température et la pression) et les positions de systèmes de positionnement complexes.

Les automates programmables (API) peuvent être utilisés dans des environnements critiques où les défaillances peuvent compromettre la sécurité des travailleurs, du public et/ou de l'environnement ou entraîner des coûts importants. C'est pourquoi ils sont usuellement utilisés sur les lignes de production de bouteilles et de boissons en général.

Pour réduire la charge de ces contrôleurs, les automate programmable industriel (AÏ) sont dotés d'autres dispositifs spécifiques qui forment une interface pour le personnel d'exploitation. Ces dispositifs sont appelés dispositifs de contrôle et de surveillance ou interface homme-machine (IHM), et plus usuellement HMI selon l'acronyme anglo-saxon « Human Machine Interface.

Le terme HMI est un terme générique qui couvre tous les composants associés à ce groupe de dispositifs. Les tableaux de commande ou OP en sont un exemple. Ceux-ci peuvent être fixes ou mobiles. Par ailleurs, les HMI sont fréquemment utilisés dans l'automatisation en réseau pour aider le personnel d'exploitation à afficher et à contrôler les données de processus de l'unité technique à commander. Cette fonction est appelée un système de contrôle et d'acquisition de données en temps réel dit SCADA selon l'acronyme anglo-saxon « Supervisory Control And Data Acquisition ». À cette fin, l'HMI est généralement doté d'un matériel spécifique. En d'autres termes, il est doté d'un écran tactile, par exemple, et est spécialement protégé des influences environnementales. Il est également équipé d'un logiciel spécifique. Celui-ci fournit des fonctions qui améliorent la convivialité, la qualité et la sécurité des opérations effectuées par l'opérateur. Ainsi, les HMI peuvent être utilisés pour visualiser, contrôler, configurer et générer des cartes de processus interactives de l'unité technique à exploiter. D'une part, cela permet l'affichage sélectif des réponses de l'unité technique, généralement sous la forme de valeurs mesurées et de messages. D'autre part, la prédéfinition personnalisée des opérations de contrôle et des entrées de données permet à l'unité technique d'être commutée dans les états requis.

Les HMI sont usuellement intégrés de manière permanente, par exemple sous la forme de terminaux, en tant que composants fixes dans un système d'automatisation. Ces terminaux sont alors généralement reliés de manière permanente à l'API par des câbles. Si ces terminaux se présentent sous la forme d'appareils portatifs, leur rayon d'action est limité par un câble de connexion. Dans de nombreux cas, cela garantit qu'un opérateur ne peut effectuer des opérations importantes pour la sécurité qu'à proximité directe de l'unité technique ou au moins lorsqu'il y a un contact visuel adéquat.

Afin de remédier à cet inconvénient, il a déjà été imaginé que l'HMI se présente sous la forme d'un panneau d'opérateur mobile, tel qu'une tablette tactile ou similaire par exemple. Un tel dispositif mobile de contrôle et de surveillance peut, par exemple, être connecté au système d'automatisation par une liaison radio de grande portée. Dans ce cas, il n'est pas exclu qu'un opérateur utilisant un dispositif mobile de contrôle et de surveillance s'éloigne tellement d'une unité technique associée que des opérations importantes pour la sécurité sont effectuées à une distance qui n'est pas autorisée en soi. Dans ce cas, la sécurité des personnes ne pourrait pas être assurée.

C'est le cas notamment du document EP2077473 qui décrit une méthode et un système d'accès à un élément dans un environnement de contrôle de processus à l'aide d'un communicateur portable comprend la définition de plusieurs zones de contrôle dans l'environnement de contrôle de processus, la détermination d'une position d'un utilisateur utilisant un communicateur portable par rapport à une ou plusieurs zones de contrôle, l'établissement d'une identité de l'utilisateur et l'autorisation sélective de l'utilisateur d'accéder à un élément dans l'environnement de contrôle de processus via le communicateur portable en fonction de la position déterminée de l'utilisateur par rapport à une ou plusieurs zones de contrôle et en fonction de l'identité de l'utilisateur.

Bien que ces HMI portables, contrairement aux HMI fixes qui limitent les visualisations les actionneurs des machines et imposent à l'opérateur de la machine de faire le tour pour voir le résultat de sa commande sur le HMI fixe, permettent à l'opérateur de commander les actionneurs de la machine « portes ouvertes » en étant au droit desdites « portes ouvertes » pour visualiser le résultat de sa commande, ces HMI portables ne permettent pas à l'opérateur d'être alerté d'une nouvelle alarme alors qu'il ne regarde pas l'écran du HMI.

### Divulgation de l'invention

L'un des buts de l'invention est donc de remédier à ces inconvénients en proposant un système de gestion d'une ligne de production de bouteilles ou de boissons de conception simple et peu onéreuse et permettant à l'opérateur d'être alerté d'une nouvelle alarme alors qu'il ne regarde pas l'écran du HMI notamment.

A cet effet, et conformément à l'invention, il est proposé un système de gestion d'une ligne de production comprenant au moins une machine, ledit système comportant au moins une interface homme-machine dite HMI connectée à un automate programmable industriel, dit API ou PLC selon l'acronyme anglo-saxon « Programmable Logic Controller, ou à un système numérique de contrôle-commande dit SNCC ou DCS selon l'acronyme anglo-saxon « Distributed Control System » ou similaire, d'une machine de ladite ligne de production, et/ou un terminal portable ; au moins une borne déportée solidaire de la machine ou d'une enceinte de sécurité de ladite machine et connectée à l'interface homme-machine (HMI) ou connectée à l'automate programmable industriel (API) de la machine, ladite borne déportée comportant des moyens de détection de la présence du terminal portable dans un périmètre déterminé et des moyens de connexion dudit terminal portable avec l'interface homme-machine (HMI) et/ou à l'automate programmable industriel (API) de la machine ; remarquable en ce que ledit terminal portable et/ou un accessoire portable, connecté audit terminal portable et/ou à la borne déportée, comporte un dispositif de génération de vibrations aptes à générer des vibrations lorsque le HMI émet une alarme.

Selon une variante d'exécution, lesdites vibrations générées sont continues.

Selon une autre variante d'exécution, lesdites vibrations générées sont intermittentes.

Par ailleurs, la durée des vibrations générées dépend du type d'alarme et/ou la fréquence des vibrations générées dépend du type d'alarme et/ou l'intensité des vibrations générées dépend du type d'alarme.

De plus, le nombre et/ou la durée et/ou la fréquence des vibrations intermittentes dépend du type d'alarme.

De manière avantageuse, un signal de vibrations continues ou intermittentes est assigné à une alarme particulière du HMI, chaque signal de vibrations étant préenregistrées dans une mémoire du HMI et/ou du terminal portable.

Lesdites alarmes du HMI consistent en un changement de vitesse et/ou un démarrage d'un axe et/ou une cadence atteinte et/ou un axe en mouvement et/ou un mouvement interdit et/ou un seuil de couple atteint par la machine et/ou un seuil de lag atteint par la machine et/ou une limite de course ou zone atteinte par la machine et/ou l'atteinte d'un maxi et/ou d'un mini de consigne et/ou la détection de sortie du périmètre de la borne déportée et/ou similaire.

Par ailleurs, le terminal portable se connecte à l'interface homme-machine (HMI) et/ ou à l'automate programmable industriel (API) de la machine au moyen d'un réseau sans fil.

Ledit réseau sans fil consiste en un réseau wi-fi, bluetooth ou zigbee.

De manière alternative, chaque borne déportée est connectée à l'interface homme-machine (HMI) et/ou à l'automate programmable industriel (API) de la machine par une liaison filaire.

De préférence, le terminal portable se connecte automatiquement à l'interface homme-machine (HMI) et/ou à l'automate programmable industriel (API) de la machine lorsque ledit terminal portable est détecté dans le périmètre de la borne déportée.

Accessoirement, ladite unité portable comporte des moyens aptes à personnaliser l'interface homme-machine (HMI) de la machine sur laquelle elle est connectée et ladite unité portable comporte des moyens de connexion à un serveur distant.

### Brève description des dessins

D'autres avantages et caractéristiques ressortiront mieux de la description qui va suivre de plusieurs variantes d'exécution, données à titre d'exemples non limitatifs, du système de gestion d'une ligne de production de bouteilles ou de boissons conforme à l'invention, en référence aux dessins annexés sur lesquels :
[Fig.1] est une représentation schématique de la structure d'une ligne de production de bouteilles ou de boissons comprenant un système de gestion de ladite ligne conforme à l'invention,
[Fig.2] est une représentation schématique d'une unité de fabrication de récipients comprenant un système de gestion d'une ligne de production conforme à l'invention.

### Mode de réalisation de l'invention

Dans la suite de la description du récipient suivant l'invention, les mêmes références numériques désignent les mêmes éléments. Les différentes vues ne sont pas nécessairement tracées à l'échelle.

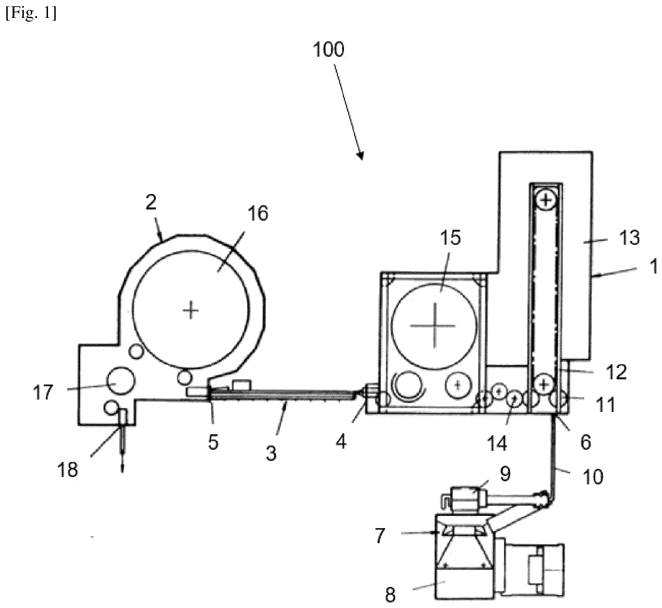

En référence à la [Fig.1], la ligne de production de bouteilles ou de boissons 100 comprend essentiellement une unité 1 de fabrication de récipients, tels que des bouteilles, en matière thermoplastique, une unité 2 de remplissage desdits récipients, et une unité 3 de convoyage des récipients fabriqués depuis la sortie 4 de l'unité de fabrication 1 jusqu'à l'entrée 5 de l'unité de remplissage.

On observera que ladite ligne de de production de bouteilles ou de boissons 100 pourra éventuellement comprendre également une unité d'étiquetage et/ou une unité de bouchage des récipients et/ou une unité de traitement de surface des récipients, du type permettant un dépôt d'un revêtement barrière par plasma, non représentées sur la [Fig.1] sans pour autant sortir du cadre de l'invention.

L'unité de fabrication 1 peut être de tout type approprié pour la fabrication de récipients, tels que des bouteilles, en matière thermoplastique telle que le polyéthylènetherephtalate PET, le polyéthylènenaphtalate PEN ou autres. Elle reçoit, à son entrée, des préformes en matière amorphe en provenance d'une unité 7 d'alimentation en préformes. L'unité 7 peut consister en une trémie 8 recevant en vrac des préformes fabriquées par moulage préalablement et en un autre emplacement, laquelle trémie est reliée à l'entrée 6 par un trieur 9 qui isole et positionne les préformes sur dispositif de convoyage 10 reliée à l'entrée 6 de l'unité de fabrication (alimentation en préformes froides) comme représenté sur la [Fig.1]. L'unité 7 peut également consister en l'unité de moulage des préformes elle-même qui délivre les préformes venant d'être moulées et encore chaudes directement à l'entrée 6 de l'unité de fabrication (alimentation en préformes chaudes).

Le traitement des préformes au sein de l'unité de fabrication peut être quelconque et adapté au type de récipients à produire (soufflage simple ou double, traitement thermique simple ou multiple, etc.). Sur la [Fig.1] est reproduit, pour des raisons de simplicité et de clarté, un traitement simple des préformes qui sont montées en 11 sur une chaîne de transfert 12, puis chauffées au défilé dans un four-tunnel 13 avant d'être reprises en 14 pour être introduites chaudes dans un dispositif 15 de soufflage ou d'étirage-soufflage à moules multiples disposés sur un carrousel. Après refroidissement contrôlé, les récipients qui viennent d'être fabriqués sont présentés à la sortie 4 de l'unité de fabrication 1.

Les récipients reçus à l'entrée 5 de l'unité de remplissage 2 sont disposés sur un dispositif de remplissage à tambour tournant 16 d'où, une fois remplis, ils sont extraits et présentés à un dispositif de bouchage 17. Les récipients remplis et bouchés sont alors évacués par la sortie 18 de l'unité de remplissage 2, vers un poste d'étiquetage puis un poste d'emballage (non montrés).

L'unité de fabrication de récipients 1 et l'unité de remplissage 2 sont disposées aussi près que possible l'une de l'autre de manière que la distance entre la sortie 4 de la première et l'entrée 5 de la seconde soit aussi faible que possible. L'unité de convoyage 3 qui s'étend de la susdite sortie 4 à la susdite entrée 5 est donc courte et l'introduction des récipients de l'unité de convoyage 3 dans l'unité de remplissage 2 s'effectue directement, sans passer par l'intermédiaire d'un dispositif de lavage devenu inutile en raison du risque maintenant très réduit de pollution intérieure des récipients. Compte tenu de sa faible longueur, l'unité de convoyage 3 peut certes être du type à jets d'air comme les dispositifs transporteurs de très grande longueur employés dans les installations actuelles, mais elle peut aussi être réalisée dans des conditions économiquement acceptables sous forme d'un dispositif transporteur à chaîne sans fin par exemple à pinces qui est apte à transporter les récipients avec un pas d'écartement constant.

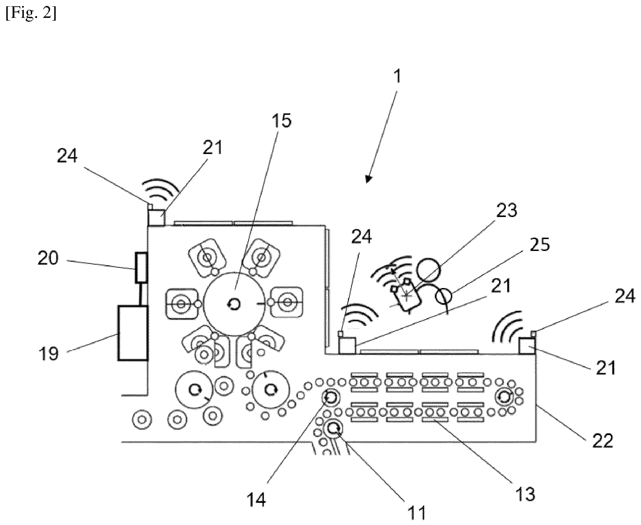

En référence à la [Fig.2], l'unité de fabrication de récipients 1 comporte un automate programmable (API) 19 pour piloter les différents organes de ladite unité de fabrication 1 et une interface homme-machine (HMI) 20 connecté audit automate programmable 19.

Il va de soi que chaque unité, i.e. chaque machine, de la ligne de production 100 comporte un automate programmable (API) et une interface homme-machine (HMI) bien que seule l'unité de fabrication de récipients 1 soit représentée sur la [Fig.1].

Accessoirement, il est bien évident que l'automate programmable (API) également appelé PLC selon l'acronyme anglo-saxon « Programmable Logic Controller » pourra être substitué par un système numérique de contrôle-commande dit SNCC ou DCS selon l'acronyme anglo-saxon « Distributed Control System » ou similaire sans pour autant sortir du cadre de l'invention.

Par ailleurs, le système de gestion d'une ligne de production 100 comporte une borne déportée 21 solidaire d'une enceinte de sécurité 22 l'unité de fabrication de récipients 1 et connectée à l'interface homme-machine (HMI) 20 ou connectée à l'automate programmable industriel (API) 19 de ladite l'unité de fabrication de récipients 1, ladite borne déportée 21 comportant des moyens de détection de la présence d'un terminal portable 23 dans un périmètre déterminé et des moyens de connexion dudit terminal portable 23 avec l'interface homme-machine (HMI) 20 et/ou à l'automate programmable industriel (API) 19 l'unité de fabrication de récipients 1. On observera que, dans cet exemple particulier de réalisation, le système de gestion de la ligne de production 1 comporte une pluralité de bornes déportées 21 solidaires de l'enceinte de sécurité 22, à différentes localisation, chaque borne déportée 21 étant connectée à l'interface homme-machine (HMI) 20 et/ou à l'automate programmable industriel (API) 19 et définissant respectivement un périmètre déterminé dans lequel le terminal portable 23, ce dernier se connectant à l'interface homme-machine (HMI) 20 et/ou à l'automate programmable industriel (API) 19 uniquement lorsque ledit terminal portable 23 est localisé à l'intérieur de l'un de ces périmètres déterminés des bornes déportées 21.

Il est bien évident que la ou les bornes déportées 21 pourront être solidaires de chaque machine, i.e. de chaque unité 1 de fabrication de récipients, unité 2 de remplissage desdits récipients, ou unité 3 de convoyage des récipients sans pour autant sortir du cadre de l'invention.

Ledit terminal portable 23 peut se présenter sous la forme d'un terminal informatique, sous la forme d'une tablette ou d'un téléphone cellulaire, d'une montre connectée, à savoir tout terminal équipé d'un écran.

On observera que ledit terminal portable 23 peut aussi comprendre une surface d'affichage holographique, comme un casque ou des lunettes holographiques sans pour autant sortir du cadre de l'invention.

Ainsi, l'opérateur peut transporter ledit terminal portable 23 au fil de ses déplacements le long de la ligne de production 100, ayant directement accès à toute ou partie de la gestion informatisée d'une unité au travers de ladite interface homme-machine (HMI) 20. Plus avant, au travers de ladite interface homme-machine (HMI) 20, de façon non limitative, l'opérateur peut sélectionner différents modes de fonctionnement de l'unité de fabrication de récipients 1, vérifier l'état de certains composants ou suivre la production en cours, vérifier des anomalies potentielles, ajuster des réglages, saisir des données relatives à la production, contrôler et effectuer une étape de maintenance, etc.

De manière particulièrement avantageuse, ledit terminal portable (23) et/ou un accessoire portable 25, connecté audit terminal portable 23 et/ou à la borne déportée 21, comporte un dispositif de génération de vibrations aptes à générer des vibrations lorsque l'interface homme-machine (HMI) 20 émet une alarme. Ledit accessoire portable 25 consiste par exemple en un bracelet positionné au niveau du poignet de l'opérateur et connecté par une liaison sans bluetooth ou similaire. Il est bien évident que ledit accessoire portable 25 pourra consister en tout autre accessoire portable tel que des lunettes par exemple sans pour autant sortir du cadre de l'invention.

Lesdites vibrations générées sont continues ou intermittentes. La durée des vibrations générées dépend du type d'alarme et/ou la fréquence des vibrations générées dépend du type d'alarme et/ou l'intensité des vibrations générées dépend du type d'alarme. Pour des vibrations intermittentes générées, le nombre et/ou la durée et/ou la fréquence des vibrations intermittentes dépend du type d'alarme.

Par ailleurs, un signal de vibrations continues ou intermittentes est assigné à une alarme particulière de l'interface homme machine (HMI) 20, chaque signal de vibrations étant préenregistrées dans une mémoire de l'interface homme machine (HMI) 20 et/ou du terminal portable 23.

Par exemple, les alarmes de l'interface homme machine (HMI) consistent en un changement de vitesse et/ou un démarrage d'un axe et/ou une cadence atteinte et/ou un axe en mouvement et/ou un mouvement interdit et/ou un seuil de couple atteint par la machine et/ou un seuil de lag atteint par la machine (lag error ou erreur de poursuite) et/ou une limite de course ou zone atteinte par la machine et/ou l'atteinte d'un maxi et/ ou d'un mini de consigne et/ou la détection de sortie du périmètre de la borne déportée et/ou similaire.

Il est bien évident que les alarmes auxquelles sont assignées des signaux vibratoires pourront consister dans tout autre type d'alarme sans pour autant sortir du cadre de l'invention.

Par ailleurs, de manière avantageuse, le terminal portable se connecte à l'interface homme-machine (HMI) 20 et/ou à l'automate programmable industriel (API) 19 de l'unité de fabrication de récipients 1 au moyen d'un réseau sans fil. Ledit réseau sans fil consiste en un réseau wi-fi, bluetooth ou zigbee ou dans tout autre réseau sans fil approprié. Chaque borne déportée 21 est quant à elle connectée à l'interface homme-machine (HMI) 20 et/ou à l'automate programmable industriel (API) 19 de l'unité de fabrication de récipients 1 par une liaison filaire, non représentée sur la [Fig.2].

De préférence, le terminal portable 23 se connecte automatiquement à l'interface homme-machine (HMI) 20 et/ou à l'automate programmable industriel (API) 19 de l'unité de fabrication de récipients 1 lorsque ledit terminal portable 23 est détecté dans le périmètre de la borne déportée 21. Toutefois, la connexion du terminal portable 23 pourra également être obtenue par une requête émise par l'opérateur au moyen dudit terminal portable 23, ladite requête étant alors transmise à l'interface homme-machine (HMI) 20 et/ou à l'automate programmable industriel (API) 19 via la borne déportée 21 correspondant au périmètre déterminé dans lequel est localisé le terminal portable 23, l'interface homme-machine (HMI) 20 et/ou l'automate programmable industriel (API) 19 renvoyant au terminal portable 23 la confirmation de la connexion via la borne déportée 21.

De plus, l'interface homme-machine (HMI) 20 de la machine comporte des moyens pour paramétrer ledit périmètre sous la forme d'une distance déterminée par rapport à la borne déportée 21.

Accessoirement, ladite unité portable 23 comporte au moins une caméra, non représentée sur les figures, afin de permettre à l'opérateur de filmer un élément de la machine et d'envoyer la vidéo correspondante à un système d'assistance technique à distance. A cet égard, accessoirement, ladite unité portable 23 pourra avantageusement comporter un moyen de communication audio optionnel afin de communiquer avec un service de dépannage distant et/ou des moyens de connexion à un serveur distant, tel qu'un serveur distant dudit système d'assistance technique à distance, par exemple, ledit serveur comportant une base de données des plans techniques de la machine notamment.

Par ailleurs, ladite unité portable 23 comporte des moyens aptes à personnaliser l'interface homme-machine (HMI) 20 de la machine sur laquelle elle est connectée.

De plus, ladite unité portable 23 comporte des moyens de connexion à un serveur distant.

Enfin, il est bien évident que les exemples que l'on vient de donner ne sont que des illustrations particulières en aucun cas limitatives quant aux domaines d'application de l'invention.

## Revendications

1. Système de gestion d'une ligne de production (100) comprenant au moins une machine, ledit système comportant au moins : une interface homme-machine (20) dite HMI connectée à un automate programmable industriel (19), dit API ou PLC selon l'acronyme anglo-saxon « Programmable Logic Controller, d'une machine de ladite ligne de production, ou à un système numérique de contrôle-commande dit SNCC ou DCS selon l'acronyme anglo-saxon « Distributed Control System » ou similaire et/ou
- un terminal portable (23) ;
- au moins une borne déportée (21) solidaire de la machine ou d'une enceinte de sécurité (22) de ladite machine et connectée à l'interface homme-machine (HMI) (20) ou connectée à l'automate programmable industriel (API) (19) de la machine, ladite borne déportée (21) comportant des moyens de détection de la présence du terminal portable (23) dans un périmètre déterminé et des moyens de connexion dudit terminal portable (23) avec l'interface homme-machine (HMI) (20) et/ou à l'automate programmable industriel (API) (19) de la machine ;
**caractérisé en ce que** ledit terminal portable (23) et/ou un accessoire portable (25), connecté audit terminal portable (23) et/ou à la borne déportée (21), comporte un dispositif de génération de vibrations aptes à générer des vibrations lorsque le HMI émet une alarme.

2. Système de gestion d'une ligne de production suivant la revendication 1 **caractérisé en ce que** lesdites vibrations générées sont continues.

3. Système de gestion d'une ligne de production suivant l'une quelconque des revendications 1 ou 2 **caractériséen** ce que lesdites vibrations générées sont intermittentes.

4. Système de gestion d'une ligne de production suivant l'une quelconque des revendications 1 à 3 **caractérisé en ce que** la durée des vibrations générées dépend du type d'alarme.

5. Système de gestion d'une ligne de production suivant l'une quelconque des revendications 1 à 4 **caractérisé en ce que** la fréquence des vibrations générées dépend du type d'alarme.

6. Système de gestion d'une ligne de production suivant l'une quelconque des revendications 1 à 5 **caractérisé en ce que** l'intensité des vibrations générées dépend du type d'alarme.

7. Système de gestion d'une ligne de production suivant l'une quelconque des revendications 3 à 6 **caractérisé en ce que** le nombre et/ou la durée et/ou la fréquence des vibrations intermittentes dépend du type d'alarme.

8. Système de gestion d'une ligne de production suivant l'une quelconque des revendications 2 à 7 **caractérisé en ce qu'**un signal de vibrations continues ou intermittentes est assigné à une alarme particulière du HMI (20), chaque signal de vibrations étant préenregistrées dans une mémoire du HMI (20) et/ou du terminal portable (23).

9. Système de gestion d'une ligne de production suivant l'une quelconque des revendications 1 à 8 **caractérisé en ce que** les alarmes du HMI consistent en un changement de vitesse et/ou un démarrage d'un axe et/ou une cadence atteinte et/ou un axe en mouvement et/ou un mouvement interdit et/ou un seuil de couple atteint par la machine et/ou un seuil de lag atteint par la machine et/ou une limite de course ou zone atteinte par la machine et/ou l'atteinte d'un maxi et/ou d'un mini de consigne et/ou la détection de sortie du périmètre de la borne déportée et/ou similaire.

10. Système de gestion d'une ligne de production suivant l'une quelconque des revendications 1 à 9 **caractérisé en ce que** le terminal portable (23) se connecte à l'interface homme-machine (HMI) (20) et/ou à l'automate programmable industriel (API) de la machine au moyen d'un réseau sans fil.

11. Système de gestion d'une ligne de production suivant la revendication 10 **caractérisé en ce que** ledit réseau sans fil consiste en un réseau wi-fi, bluetooth ou zigbee.

12. Système de gestion d'une ligne de production suivant l'une quelconque des revendications 1 à 11 **caractérisé en ce que** chaque borne déportée (21) est connectée à l'interface homme-machine (HMI) (20) et/ou à l'automate programmable industriel (API) (19) de la machine par une liaison filaire.

13. Système de gestion d'une ligne de production suivant l'une quelconque des revendications 1 à 12 **caractérisé en ce que** le terminal portable (23) se connecte automatiquement à l'interface homme-machine (HMI) (20) et/ou à l'automate programmable industriel (API) (19) de la machine lorsque ledit terminal portable (23) est détecté dans le périmètre de la borne déportée (21).

14. Système de gestion d'une ligne de production suivant l'une quelconque des revendications 1 à 13 **caractérisé en ce que** ladite unité portable (23) comporte des moyens aptes à personnaliser l'interface homme-machine (HMI) (20) de la machine sur laquelle elle est connectée.

15. Système de gestion d'une ligne de production suivant l'une quelconque des revendication 1 à 14 **caractérisé en ce que** ladite unité portable (23) comporte des moyens de connexion à un serveur distant.
